# EUROPÄISCHE PATENTSCHRIFT

(11) **EP 3 253 643 B1**
(45) Veröffentlichungstag und Bekanntmachung des Hinweises auf die Patenterteilung: **10.07.2019**
(21) Anmeldenummer: 16704794.3
(22) Anmeldetag: 03.02.2016
(51) Int. Cl.: B62B 9/00, F16B 7/18, B62B 9/26

(54) **RAHMENSTRUKTUR EINES KINDERWAGENS**
FRAME STRUCTURE OF A STROLLER
STRUCTURE D'UN CADRE DE POUSSETTE

(30) Priorität: 04.02.2015 DE 102015001264
(43) Veröffentlichungstag der Anmeldung: 13.12.2017
(73) Patentinhaber: Emmaljunga Barnvagnsfabrik AB, 28022 Vittsjö (SE)
(72) Erfinder: VERMILLION, Brendon, 285 37 Markaryd (SE); EDVARDSSON, Joakim, 281 43 Hässleholm (SE); JONASSON, Martin, 281 33 Hässleholm (SE); PERSSON, Christian, 280 22 Vittsjö (SE)
(74) Vertreter: Bauer, Clemens
(86) Internationale Anmeldenummer: PCT/EP2016/000171
(87) Internationale Veröffentlichungsnummer: WO 2016/124329

(56) Entgegenhaltungen:
- DE-U1-202005 016 085
- GB-A- 2 420 531
- US-A- 4 620 637
- US-A1- 2004 129 471

## Beschreibung

Die vorliegende Erfindung betrifft eine Rahmenstruktur eines Kinderwagens, eines Kindersitzes, einer Babyschale oder ähnlichem, welche ein Rahmenprofil mit einer speziellen Querschnittskonfiguration umfasst, sowie ein Mantelelement einer Rahmenstruktur gemäß dem Oberbegriff von Anspruch 13.

Rahmenprofile der in Rede stehenden Art für Kinderwägen oder Kindersitze sind hinlänglich aus dem Stand der Technik bekannt. Üblicherweise bestehen diese aus Rohren mit Kreisquerschnitten oder aus abgeflachten Rohrquerschnitten. Bei diesen Ausgestaltungen ist es nachteilig, dass Anbauteile nur mit zusätzlichen Hilfskonstruktionen, beispielsweise Rohrschellen oder ähnlichem befestigt werden können.

Die US-2004/129471 A1 betrifft eine Höhenverstellung für einen Lenker oder einen Sitz eines elektrischen Zweirads, und offenbart eine Rahmenstruktur gemäß dem Oberbegriff von Anspruch 1 sowie ein Mantelelement gemäß dem Oberbegriff von Anspruch 13.

Die GB 2 420 531 A betrifft eine Vorrichtung zum Verbinden von zwei Kinderwägen.

Die US-4,620,637 betrifft einen Wagen mit einer Vielzahl von Transportebenen und die DE 20 2005 016 085 U1 betrifft einen Transportcontainer, bei welchem die Etagen lösbar angeordnet sind.

Der Erfindung liegt daher die Aufgabe zugrunde, eine Rahmenstruktur eines Kinderwagens, eines Kindersitzes, einer Babyschale oder ähnlichem vorzusehen, welche bei einfachem Aufbau und einfacher, kostengünstiger Herstellbarkeit die einfache und leichte Befestigung unterschiedlichster Anbauteile ermöglicht. Im Übrigen soll die Rahmenstruktur es ermöglichen, die Reparaturfreundlichkeit zu erhöhen, indem die Demontage der Anbauteile einfach und insbesondere ohne Zerstörung eines Rahmenprofils ermöglicht werden soll.

Diese Aufgabe wird durch eine Rahmenstruktur eines Kinderwagens, eines Kindersitzes, einer Babyschale oder ähnlichem mit den Merkmalen des Anspruchs 1 sowie durch ein Mantelelement mit den Merkmalen des Anspruchs 13 gelöst.

Bevorzugte Ausführungsformen sind Gegenstand der abhängigen Ansprüche. Erfindungsgemäß ist eine Rahmenstruktur eines Kinderwagens, eines (Fahrzeug-) Kindersitzes, einer Babyschale oder ähnlichem, vorgesehen, umfassend ein Rahmenprofil, welches entlang seiner Profilrichtung einen im Wesentlichen konstanten Querschnitt aufweist, wobei das Rahmenprofil durch einen zumindest überwiegend geschlossenen Querschnitt gebildet ist, und wobei das Rahmenprofil einen nach innen ragenden ersten Vorsprung aufweist, der ausgelegt ist, mit einem Befestigungsmittel in Eingriff gebracht zu werden. Die Rahmenstruktur ist vorteilhafterweise derart gestaltet, dass sie Teil eines Kinderwagens, Kindersitzes oder einer Babyschale ist. In anderen Worten ist die Rahmenstruktur derart dimensioniert, dass diese für den Anwendungszweck in einem Kinderwagen oder Kindersitz geeignet ist. Hierfür weist der Querschnitt des Rahmenprofils etwa eine Erstreckung in seiner Breite von 10 mm bis 40 mm, vorzugsweise 15 mm bis 30 mm, und in seiner Höhe von 15 mm bis 60 mm, vorzugsweise 25 mm bis 45 mm, auf. Zweckmäßigerweise ist das Rahmenprofil derart ausgebildet, dass es einen zumindest überwiegend geschlossenen Querschnitt bildet, so dass das Rahmenprofil im Wesentlichen als Hohlprofil bzw. Hohlkörper ausgebildet ist. In anderen Worten umschließt das Rahmenprofil in einem Querschnitt gesehen einen Hohlraum bzw. ein Inneres bzw. Profilinneres. Der Querschnitt liegt hierbei senkrecht zur Profilrichtung des Rahmenprofils. Die Profilrichtung ist hierbei derart definiert, dass diese diejenige Erstreckung ist, entlang derer die Querschnittform des Rahmenprofils im Wesentlichen gleich bleibt. Im wesentlichen konstant bzw. gleich berücksichtigt somit lokale Abweichungen aufgrund von fertigungstechnischen Toleranzen oder lokale Vorsprünge oder Rücksprünge, wie sie mit Bezug zu bevorzugten Ausführungsformen beschrieben werden. Das Rahmenprofil weist einen überwiegend geschlossenen Querschnitt auf, so dass dieser entweder vollständig geschlossen sein kann oder auch einen Schlitz aufweisen kann, welcher jedoch lediglich einen kleinen Teil des Gesamtquerschnitts des Rahmenprofils ausmacht. So ist es bevorzugt, wenn die Erstreckung bzw. Breite des Schlitzes höchstens das 0,1-fache, bevorzugt höchstens das 0,02-fache des gesamten Umfangs des Rahmenprofils im Querschnitt einnimmt. Zweckmäßigerweise weist das Rahmenprofil einen nach innen ragenden ersten Vorsprung auf. Der Vorsprung des Rahmenprofils ragt somit in das Profilinnere bzw. im Querschnitt gesehen in den Hohlraum des Rahmenprofils. In einer Ausführungsform kann der Vorsprung im Wesentlichen radial zu der diesem benachbarten Außenfläche des Rahmenprofils ausgerichtet sein. Bevorzugt erstreckt sich der Vorsprung jedoch entlang einer Linie, welche zwischen zwei spiegelsymmetrisch an dem Rahmenprofil angeordneten Punkten liegt. Dies ist insbesondere dann vorteilhaft, wenn das Rahmenprofil selbst spiegelsymmetrisch ausgebildet ist, so dass die Linie, auf welcher sich der Vorsprung erstreckt, eine Senkrechte zu der Symmetrielinie bildet. Der Vorsprung ist ausgelegt, mit einem Befestigungsmittel in Eingriff gebracht zu werden. Hierfür kann der Vorsprung eine geometrische Konfiguration aufweisen, die es erlaubt, daran ein Befestigungsmittel festzulegen. Dieses kann beispielsweise als Loch oder Durchgangsloch mit oder ohne Gewinde ausgebildet sein. Es versteht sich, dass der Vorsprung auch derart ausgebildet sein kann, dass daran über einen Klemmmechanismus ein Befestigungsmittel festgelegt werden kann.

Erfindungsgemäß weist das Rahmenprofil einen nach innen ragenden zweiten Vorsprung auf, der dem ersten Vorsprung vorzugsweise gegenüberliegend angeordnet ist. Im Querschnitt gesehen, können somit der erste Vorsprung und der zweite Vorsprung auf einer Linie liegen, welche besonders zweckmäßigerweise bei einer spiegelsymmetrischen Ausbildung des Rahmenprofils eine Senkrechte zur Symmetrieachse bildet. Im Übrigen ist der zweite Vorsprung besonders zweckmäßigerweise hinsichtlich Form, Größe und/oder Anordnung wie der erste Vorsprung ausgebildet. Es versteht sich, dass sich jedoch der erste und zweite Vorsprung auch in einer oder mehreren der vorstehend genannten Parameter unterscheiden können. So könnte beispielsweise der erste Vorsprung weniger weit von der Innenwandung des Rahmenprofils hervorragen als der zweite Vorsprung. Dies ist insbesondere dann bevorzugt, wenn das Befestigungsmittel als Bolzen ausgebildet ist, der durch ein in dem ersten Vorsprung ausgebildetes, vorzugsweise gewindeloses Durchgangsloch hindurchragt und in einem im zweiten Vorsprung vorgesehenen Sackloch über ein dort eingebrachtes Gewinde verschraubt ist.

Zweckmäßigerweise erstreckt sich der erste und/oder zweite Vorsprung über die gesamte Profilrichtung. In anderen Worten können der erste und/oder zweite Vorsprung somit eine Art Schiene ausbilden, die im Inneren des Rahmenprofils sich entlang der Profilrichtung erstreckend angeordnet ist. Alternativ hierzu kann der erste und/oder zweite Vorsprung jedoch auch derart ausgebildet sein, dass er sich in Profilrichtung gesehen nur über einen Teil der Erstreckung des Rahmenprofils in Profilrichtung erstreckt. Hierbei ist besonders bevorzugt, wenn der Vorsprung in denjenigen Bereichen vorgesehen ist, an dem ein Befestigungsmittel vorgesehen werden soll.

Vorzugsweise weist das Rahmenprofil eine erste, sich in Profilrichtung erstreckende Nut auf, die an der Außenseite des Rahmenprofils vorgesehen ist. Hierbei ist die Breite der Nut vorteilhafterweise kleiner als die Breite des Vorsprungs. Es ist bevorzugt, dass die Nut an demjenigen Bereich des Rahmenprofils angeordnet ist, an dessen Innenseite der Vorsprung vorgesehen ist. Die Nut ist derart ausgebildet, dass diese zur Aufnahme eines in einem Mantelelement vorgesehenen Vorsprungs dient, um das Mantelelement somit hinsichtlich seiner Position relativ zu dem Rahmenprofil festzulegen.

Weiterhin vorteilhafterweise weist das Rahmenprofil eine zweite, sich in Profilrichtung erstreckende Nut auf, die an der Außenseite des Rahmenprofils vorgesehen ist und die der ersten Nut vorzugsweise gegenüberliegend angeordnet ist. Die zweite Nut weist hinsichtlich ihrer Form, Größe und/oder Anordnung im Wesentlichen die gleichen Merkmale wie die erste Nut auf. Jedoch ist die zweite Nut vorteilhafterweise an einer Wand oder Fläche des Rahmenprofils angeordnet, welche der Wand oder Fläche, an welcher die erste Nut angeordnet ist, gegenüberliegt. Bei einer Ausbildung des Rahmenprofils im Wesentlichen spiegelsymmetrisch können somit die erste und zweite Nut gleichfalls spiegelsymmetrisch zueinander angeordnet sein.

Vorteilhafterweise ragt die Nut zumindest teilweise in den Vorsprung rein. In anderen Worten sind somit die erste und/oder zweite Nut derart ausgebildet und positioniert, dass diese von der Außenfläche des Rahmenprofils so tief in bzw. durch die Wandung ragen, dass diese in den Vorsprung hineinragen. Die Nut ist somit vorteilhafterweise tiefer als die Dicke der Wand bzw. Seite des Rahmenprofils.

Bevorzugt erstreckt sich die Nut nur über einen Teil der Profilrichtung. Während sich der erste und/oder zweite Vorsprung vorteilhaft über die gesamte Profilrichtung erstrecken, ist die erste und/oder zweite Nut derart ausgebildet, dass diese sich nur über einen Teil der Profilrichtung erstrecken und somit nicht Teil der Grundkonfiguration des Profilquerschnitts bilden. Besonders vorteilhafterweise erstrecken sich die erste und/oder zweite Nut nur über denjenigen Bereich des Rahmenprofils, der von einem daran angeordneten Mantelelement überdeckt werden soll bzw. überdeckt wird. Vorzugsweise ist somit die Nut in ihrer Erstreckung entlang der Profilrichtung kleiner als die Erstreckung des Mantelelements entlang der Profilrichtung.

Zweckmäßigerweise erstreckt sich somit die Nut nur über bzw. entlang eines Teils des sich in Profilrichtung erstreckenden Vorsprungs.

Erfindungsgemäß weist das Rahmenprofil zumindest ein Durchgangsloch auf, welches sich durch den ersten Vorsprung erstreckt. Das Rahmenprofil weist somit zumindest ein vorteilhafterweise sich quer zur Profilrichtung erstreckendes Loch auf, welches sich von der Außenseite des Rahmenprofils zum von diesem umschlossenen Hohlraum erstreckt und somit als Durchgangsloch ausgebildet ist. Das Durchgangsloch ist zweckmäßigerweise gewindelos ausgebildet. Besonders vorteilhafterweise ist das Durchgangsloch derart angeordnet, dass es sich durch den ersten Vorsprung erstreckt. Insofern ist die Tiefe des Durchgangslochs größer als die mittlere Wandstärke des Rahmenprofils. Hierdurch ist es vorteilhafterweise möglich, größere Kräfte von einem durch das Durchgangsloch ragenden Befestigungsmittel auf das Rahmenprofil zu übertragen. Besonders bevorzugt weist das Rahmenprofil an einer Seite zwei Durchgangslöcher auf, welche somit den ersten Vorsprung vorzugsweise schneiden. Bevorzugt ist die Vielzahl der Durchgangslöcher in Profilrichtung angeordnet, d. h. liegen auf einer Geraden, die parallel zur Profilrichtung steht.

Erfindungsgemäß schneidet die Achse des Durchgangslochs den zweiten Vorsprung, wobei vorzugsweise in dem zweiten Vorsprung ein Sackloch oder Durchgangsloch vorgesehen ist. In anderen Worten können somit das Durchgangsloch des ersten Vorsprungs und das Sackloch oder Durchgangsloch des zweiten Vorsprungs koaxial zueinander ausgerichtet sein bzw. entlang derselben Achse bzw. Geraden liegen. Das in dem zweiten Vorsprung vorgesehene Sackloch ist vorteilhafterweise insbesondere derart gestaltet, dass es sich in den Innenraum des Rahmenprofils öffnet, d. h. der Boden des Sacklochs in der Wand bzw. Außenfläche des Rahmenprofils endet bzw. durch diesen gebildet ist. Ein derartiges Sackloch ist beispielsweise herstellbar, indem der das Durchgangsloch der gegenüberliegenden Wandung herstellende Bohrer bis zu dem nach innen gerichteten zweiten Vorsprung geführt wird und in diesen hinein bohrt. Zweckmäßigerweise sind das in dem zweiten Vorsprung vorgesehene Durchgangsloch bzw. Sackloch mit einem Innengewinde versehen, in welches das Befestigungsmittel eingreift bzw. eingreifen kann

In einer bevorzugten Ausführungsform weist die Rahmenstruktur weiterhin ein Mantelelement auf, welches das Rahmenelement im Wesentlichen umgibt, wobei das Mantelelement über ein bzw. das Befestigungsmittel bzw. -element an dem Rahmenprofil festlegbar oder festgelegt ist, vorzugsweise indem das Befestigungsmittel mit dem ersten Vorsprung in Eingriff steht. Das Mantelelement ist somit als eine Art Hülse ausgebildet, welches über das Rahmenprofil geschoben werden kann. Hierfür weist das Mantelelement zweckmäßigerweise eine Innenkonfiguration auf, die im Wesentlichen der Außenkonfiguration des Rahmenprofils entspricht. Um das Mantelelement an dem Rahmenprofil in Profilrichtung zu fixieren bzw. festzulegen bzw. zu befestigen, kann ein Befestigungsmittel bzw. -element vorgesehen sein, welches einerseits mit dem ersten Vorsprung des Rahmenprofils in Eingriff steht und andererseits mit dem Mantelelement in Verbindung steht. Da das Mantelelement zweckmäßigerweise auf dem Rahmenprofil geführt ist und somit nur entlang der Profilrichtung verschiebbar ist, kann es ausreichend sein, wenn das Befestigungsmittel sich lediglich in ein in dem ersten Vorsprung ausgebildeten Durchgangsloch hinein erstreckt, ohne mit diesem verschraubt zu sein. Besonders zweckmäßigerweise ist es jedoch, wenn das Befestigungsmittel beispielsweise als Schraubbolzen ausgebildet ist, der sich durch das in dem ersten Vorsprung ausgebildeten Durchgangsloch hindurch erstreckt und mit einem in dem zweiten Vorsprung ausgebildeten Gewinde verschraubt oder verschraubbar ist.

Das Mantelelement weist einen nach innen ragenden Vorsprung auf, der vorzugsweise formschlüssig mit der im Rahmenprofil vorgesehenen Nut in Eingriff steht oder bringbar ist. In anderen Worten kann das Mantelelement somit einen Vorsprung aufweisen, der insbesondere zweckmäßigerweise formkomplementär zu dem im Rahmenprofil vorgesehenen Rücksprung bzw.Nut ausgebildet ist. Da der Vorsprung bei der Positionierung des Mantelelements auf dem Rahmenprofil in die Nut einrastet, ist eine Verschiebbarkeit des Mantelelements auf dem Rahmenprofil nur noch schwer möglich und somit eine Vorfixierung bzw. Vorpositionierung vorteilhaft ermöglicht. Besonders vorteilhafterweise weist das Mantelelement an zwei gegenüberliegenden Innenflächen Vorsprünge auf, die in die entsprechenden beiden Nuten des Rahmenprofils eingreifen können.

Weiterhin vorzugsweise weist das Mantelelement lediglich an der dem ersten Vorsprung benachbarten Seite ein Durchgangsloch für das Befestigungsmittel bzw. - element auf. In anderen Worten weist das Mantelelement lediglich an einer Seitenfläche eines oder mehrere Durchgangslöcher für Befestigungsmittel bzw. -elemente auf. An der gegenüberliegenden Seite, d. h. an der Seite des Mantelelements, welche benachbart zu dem zweiten Vorsprung anzuordnen ist, weist das Mantelelement vorzugsweise keinen Durchbruch auf, zumindest insbesondere keinen Durchbruch für das Befestigungsmittel. Bevorzugt ist dies diejenige Seite, welche im Gebrauchszustand nach außen angeordnet ist, wohingegen die Seite, an welcher die Befestigungselemente anzuordnen sind, in der Regel von einem Sitz des Kinderwagens abgedeckt werden.

Weiterhin erfindungsgemäß ist ein Mantelelement einer Rahmenstruktur eines Kinderwagens, eines Kindersitzes, einer Babyschale oder ähnlichem vorgesehen, welches hülsenförmig ausgebildet ist, einen ersten, nach Innen ragenden Vorsprung aufweist, und lediglich an einer Seitenfläche eines oder mehrere Durchgangslöcher für Befestigungsmittel aufweist, welche(s) sich vorzugsweise durch den Vorsprung erstreckt bzw. erstrecken.

Erfindungsgemäß weist das Mantelelement weiterhin einen zweiten, nach Innen ragenden Vorsprung auf, wobei die beiden Vorsprünge an gegenüberliegenden Innenflächen des Mantelelements vorgesehen sind.

Weiterhin kann das Mantelelement in bevorzugten Ausführungsformen die mit Bezug zu der Rahmenstruktur beschriebenen, dessen Mantelelement betreffenden Merkmale aufweisen.

Es versteht sich, dass in einer bevorzugten Ausführungsform auch eine Vielzahl von an der Seite des ersten Vorsprungs vorgesehenen Durchgangslöchern und/oder eine Vielzahl von an der Seite des zweiten Vorsprungs angeordneten Sack- oder Durchgangslöchern in dem Rahmenprofil vorgesehen sein können. Entsprechend kann das Mantelelement auch eine Vielzahl von Durchgangslöchern für Befestigungsmittel bzw. -elemente aufweisen.

Weiterhin zweckmäßigerweise ist das Rahmenprofil spiegelsymmetrisch ausgebildet. Hierbei liegt die Symmetrieachse insbesondere derart, dass erster und zweiter Vorsprung des Rahmenprofils spiegelsymmetrisch zueinander angeordnet sind.

Bevorzugt ist das Rahmenprofil aus einem Metall, vorzugsweise Aluminium, extrudiert ausgebildet. In anderen Worten ist das Rahmenprofil somit zweckmäßigerweise als einstückiger Körper ausgebildet. Das Mantelelement kann aus einem Kunststoff, beispielsweise Polyamid oder Polypropylen, ausgebildet sein. Die Befestigungsmittel sind zweckmäßigerweise als Bolzen oder Schraube ausgebildet, vorzugsweise aus Stahl. Hierbei kann das Befestigungsmittel insbesondere selbstschneidende Eigenschaften aufweisen, so dass es fertigungstechnisch lediglich notwendig ist, die Löcher in dem Rahmenprofil vorzusehen, ohne hierin ein zusätzliches Gewinde einschneiden zu müssen.

Das Rahmenprofil besitzt vorteilhafterweise eine Wandstärke von 0,2 mm bis 5 mm, vorzugsweise 0,6 mm bis 3,5 mm und besonders vorzugsweise 1 mm bis 2 mm. Hierdurch wird ein idealer Kompromiss zwischen Festigkeit und Gewicht geschaffen.

Der erste und/oder zweite Vorsprung ragt derart nach innen, dass dieser von der Innenoberfläche des Rahmenprofils 0,6 mm bis 15 mm, vorzugsweise 1,5 mm bis 10 mm und besonders vorzugsweise 2,5 mm bis 5 mm hervorragt. Hierdurch wird ermöglicht, dass die Vorsprünge optimal Kräfte aufnehmen können, ohne das Gewicht des Rahmenprofils zu sehr negativ zu beeinflussen.

Weitere Vorteile und Merkmale der vorliegenden Erfindung werden mit Bezug auf die nachfolgend beschriebenen Ausführungsformen erläutert, wobei Merkmale einzelner Ausführungsformen zu neuen Ausführungsformen miteinander kombiniert werden können. Es zeigen:
- Fig. 1: eine perspektivische Ansicht einer ersten bevorzugten Ausführungsform einer erfindungsgemäßen Rahmenstruktur,
- Fig. 2: eine teilweise geschnittene Ansicht der Ausführungsform gemäß Fig. 1,
- Fig. 3: eine teilweise geschnittene perspektivische Ansicht einer Ausführungsform eines Rahmenprofils,
- Fig. 4: eine teilweise geschnittene Querschnittsansicht der Ausführungsform gemäß Fig. 1.

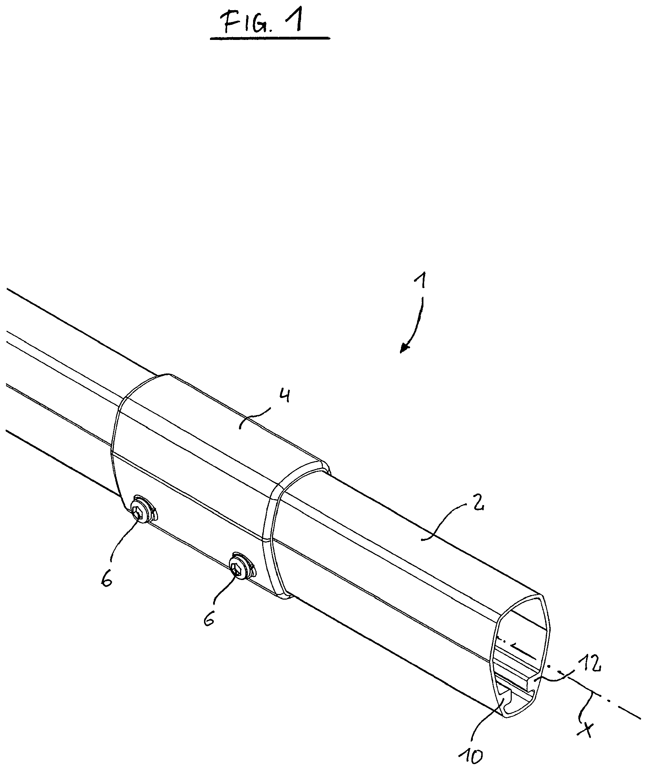

In den Fig. 1 bis 4 ist eine bevorzugte Ausführungsform einer erfindungsgemäßen Rahmenstruktur bzw. eines erfindungsgemäßen Rahmenprofils dargestellt.

Wie insbesondere aus Fig. 1 ersichtlich ist, weist die Rahmenstruktur 1 ein Rahmenprofil 2 auf, auf welchem ein Mantelelement 4 über Befestigungsmittel 6 festgelegt ist.

Das Rahmenprofil 2 erstreckt sich entlang der Profilrichtung X und ist derart gestaltet, dass es als Profilkörper ausgebildet ist, welcher sich entlang der Profilrichtung X in seinem Querschnitt im Wesentlichen nicht ändert, sondern konstant bzw. gleichbleibend ausgebildet ist.

Das Rahmenprofil 2 ist als geschlossener Querschnitt ausgebildet und begrenzt somit ein Inneres bzw. Innenraum bzw. Hohlraum 8. An der Innenseite bzw. -fläche bzw. -wand des Rahmenprofils 2 sind ein erster Vorsprung 10 und ein zweiter Vorsprung 12 ausgebildet. Die Vorsprünge 10, 12 erstrecken sich in Profilrichtung vorteilhafterweise über die gesamte Profillänge. Vorteilhafterweise ist das Rahmenprofil 2 zu einer Symmetrieebene Y spiegelsymmetrisch ausgebildet, wobei zweckmäßigerweise die Vorsprünge 10, 12 spiegelsymmetrisch zueinander angeordnet sind.

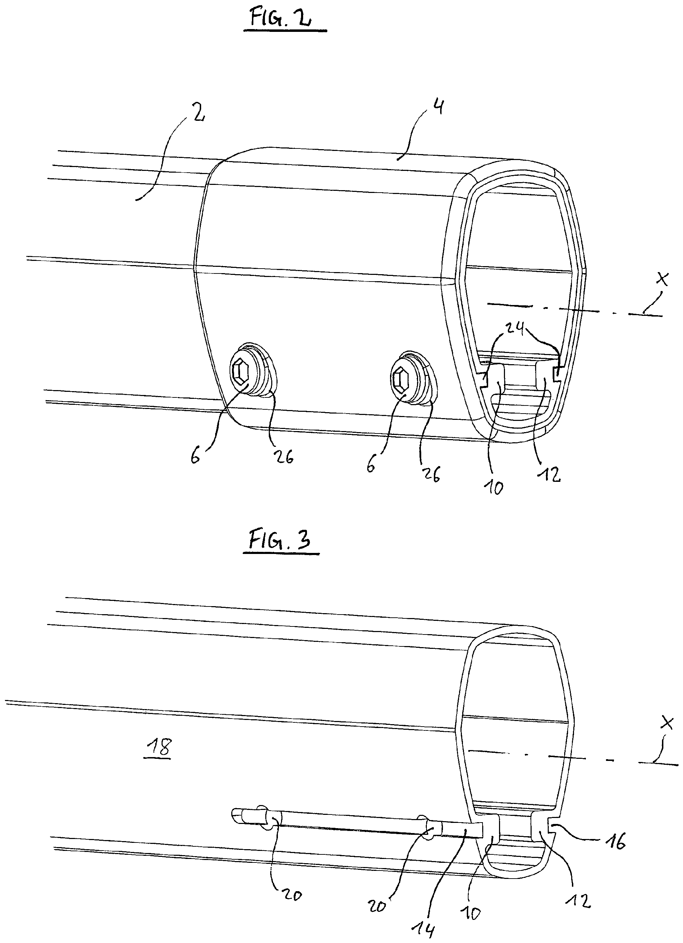

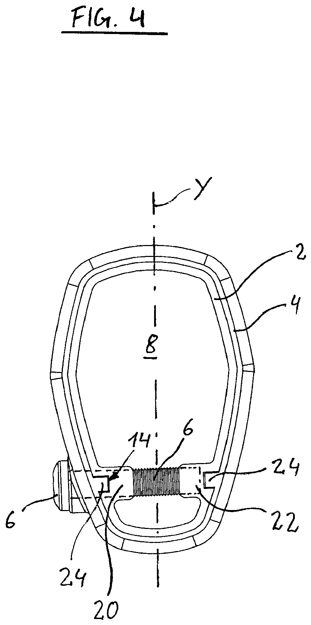

Korrespondierend zu den Vorsprüngen 10, 12 weist das Rahmenprofil 2 an seiner Außenwand bzw. Außenfläche jeweils eine erste Nut 14 und eine zweite Nut 16 auf, wie insbesondere in den Fig. 2 und 3 dargestellt ist. Vorteilhafterweise sind auch erste Nut 14 und zweite Nut 16, bezogen auf die Symmetrieebene Y, spiegelsymmetrisch zueinander angeordnet (vgl. Fig. 4).

An einer ersten Seite 18 bzw. Seitenfläche weist das Rahmenprofil zwei Durchgangsbohrungen bzw. Durchgangslöcher 20 auf, die sich von der Außenseite in den Hohlraum 8 erstrecken. Die Durchgangslöcher 20 fluchten hierbei zu bzw. liegen auf der ersten Nut 14. In einer alternativen oder zusätzlich bevorzugten Ausführungsform fluchten die Durchgangslöcher 20 bzw. liegen derart, dass sie durch den ersten Vorsprung 10 hindurch ragen.

Koaxial zu den Durchgangslöchern 20 sind im zweiten Vorsprung 12 Sacklöcher 22 eingebracht (in Fig. 4 gestrichelt dargestellt), die sich von dem Inneren bzw. Hohlraum 8 in den zweiten Vorsprung 12 hinein erstrecken, ohne die Wand des Rahmenprofils 2 nach außen hin zu durchstoßen.

Das Mantelelement 4 weist eine Querschnittskonfiguration auf, die derart gestaltet ist, dass dessen Innenseite im Wesentlichen zur Außenseite des Rahmenprofils 2 entspricht bzw. kongruent ist (vgl. Fig. 4). Das Mantelelement 4 weist an seiner nach innen gerichteten Seite zu der ersten Nut 14 und zweiten Nut 16 des Rahmenprofils 2 kongruente Vorsprünge 24 auf. Diese rasten nach Positionierung des Mantelelements 4 auf dem Rahmenprofil 2 in die erste bzw. zweite Nut 14, 16 ein und ermöglichen somit eine Vorfixierung des Mantelelements 4 auf dem Rahmenprofil 2. Um das Mantelelement 4 vollständig an dem Rahmenprofil 2 festzulegen, weist das Mantelelement 4 Durchgangslöcher 26 auf, welche von den Befestigungsmitteln 6 durchgriffen werden. Hierdurch wird eine Befestigung des Mantelelements 4 auf dem Rahmenelement 2 ermöglicht.

### Bezugszeichenliste:

- 1: Rahmenstruktur
- 2: Rahmenprofil
- 4: Mantelelement
- 6: Befestigungsmittel
- 8: Hohlraum
- 10: erster Vorsprung
- 12: zweiter Vorsprung
- 14: erste Nut
- 16: zweite Nut
- 18: erste Seite
- 20: Durchgangsloch
- 22: Sackloch
- 24: Vorsprung
- 26: Durchgangsloch
- X: Profilrichtung
- Y: Symmetrieebene

## Patentansprüche

1. Rahmenstruktur eines Kinderwagens, eines Kindersitzes, einer Babyschale oder ähnlichem,
umfassend ein Rahmenprofil (2), welches entlang seiner Profilrichtung (X) einen im wesentlichen konstanten Querschnitt aufweist,
wobei das Rahmenprofil (2) durch einen zumindest überwiegend geschlossenen Querschnitt gebildet ist, und
wobei das Rahmenprofil (2) einen nach Innen ragenden ersten Vorsprung (10) aufweist, der ausgelegt ist, mit einem Befestigungsmittel (6) in Eingriff gebracht zu werden, und
wobei das Rahmenprofil (2) einen nach Innen ragenden zweiten Vorsprung (12) aufweist, **dadurch gekennzeichnet,**
**daß** das Rahmenprofil (2) zumindest ein Durchgangsloch (20) aufweist, welches sich durch den ersten Vorsprung (10) erstreckt, und wobei die Achse des Durchgangslochs (20) den zweiten Vorsprung (12) schneidet.

2. Rahmenstruktur nach Anspruch 1, wobei der zweite Vorsprung (12) dem ersten Vorsprung (10) gegenüberliegend angeordnet ist.

3. Rahmenstruktur nach einem der vorhergehenden Ansprüche, wobei sich der erste und/oder zweite Vorsprung (10, 12) über die gesamte Profilrichtung (X) oder sich in Profilrichtung (X) gesehen nur über einen Teil der Erstreckung des Rahmenprofils (2) in Profilrichtung (X) erstreckt.

4. Rahmenstruktur nach einem der vorhergehenden Ansprüche, wobei das Rahmenprofil (2) eine erste sich in Profilrichtung (X) erstreckende Nut (14) aufweist, die an der Außenseite des Rahmenprofils (2) vorgesehen ist.

5. Rahmenstruktur nach Anspruch 4, wobei das Rahmenprofil (2) eine zweite sich in Profilrichtung (X) erstreckende Nut (16) aufweist, die an der Außenseite des Rahmenprofils (2) vorgesehen ist und die der ersten Nut (14) vorzugsweise gegenüberliegend angeordnet ist.

6. Rahmenstruktur nach einem der Ansprüche 4 oder 5, wobei die erste und/oder zweite Nut (14, 16) zumindest teilweise in den ersten bzw. zweiten Vorsprung (10, 12) hineinragt.

7. Rahmenstruktur nach einem der Ansprüche 4 - 6, wobei sich die erste und/oder zweite Nut (14, 16) nur über bzw. entlang eines Teils des sich in Profilrichtung (X) erstreckenden ersten bzw. zweiten Vorsprungs (10, 12) erstreckt.

8. Rahmenstruktur nach einem der vorhergehenden Ansprüche, wobei in dem zweiten Vorsprung (12) ein Sackloch (22) oder Durchgangsloch vorgesehen ist.

9. Rahmenstruktur nach einem der vorhergehenden Ansprüche, weiterhin aufweisend ein Mantelelement (4), welches das Rahmenprofil (2) im wesentlichen umgibt, wobei das Mantelelement (4) über ein bzw. das Befestigungsmittel (6) an dem Rahmenprofil (2) festlegbar oder festgelegt ist, vorzugsweise indem das Befestigungsmittel (6) mit dem ersten Vorsprung (10) in Eingriff steht.

10. Rahmenstruktur nach Anspruch 9, wobei das Mantelelement (4) einen nach Innen ragenden Vorsprung (24) aufweist, der vorzugsweise formschlüssig mit der im Rahmenprofil vorgesehenen Nut (14, 16) in Eingriff steht oder bringbar ist.

11. Rahmenstruktur nach Anspruch 9 oder 10, wobei das Mantelelement (4) lediglich an der dem ersten Vorsprung (10) benachbarten Seite ein Durchgangsloch (26) für das Befestigungsmittel (6) aufweist.

12. Rahmenstruktur nach einem der vorhergehenden Ansprüche, wobei der erste und zweite Vorsprung (10, 12) des Rahmenprofils (2) spiegelsymmetrisch zueinander angeordnet sind.

13. Mantelelement einer Rahmenstruktur eines Kinderwagens, eines Kindersitzes, einer Babyschale oder ähnlichem,
welches hülsenförmig ausgebildet ist, und
einen nach Innen ragenden Vorsprung (24) aufweist,
weiterhin aufweisend einen zweiten, nach Innen ragenden Vorsprung, wobei die beiden Vorsprünge an gegenüberliegenden Innenflächen des Mantelelements vorgesehen sind, **dadurch gekennzeichnet, daß**
das Mantelement lediglich an einer Seitenfläche eines oder mehrere Durchgangslöcher (20) für Befestigungsmittel (6) aufweist, welches bzw. welche sich durch den Vorsprung (24) erstreckt bzw. erstrecken.

## Claims

1. A frame structure of a perambulator, a child seat, an infant carrier or the like,
comprising a profiled frame element (2), which along its profile direction (X) has a substantially constant cross-section,
wherein the profiled frame element (2) is formed by an at least predominantly closed cross-section, and
wherein the profiled frame element (2) has an inwardly projecting first protrusion (10) which is designed to be brought into engagement with a fastening means (6), and
wherein the profiled frame element (2) has an inwardly projecting second protrusion (12), **characterized in that**
the profiled frame element (2) comprises at least one through-hole (20), which extends through the first protrusion (10), and
wherein the axis of the through-hole (20) intersects the second protrusion (12).

2. The frame structure according to claim 1, wherein the second protrusion (12) is arranged opposite the first protrusion (10).

3. The frame structure according to one of the preceding claims, wherein the first and/or second protrusion (10, 12) extends over the entire profile direction (X) or, seen in profile direction (X), only over part of the extension of the profiled frame element (2) in profile direction (X).

4. The frame structure according to one of the preceding claims, wherein the profiled frame element (2) has a first groove (14) extending in profile direction (X), which is provided on the outside of the profiled frame element (2).

5. The frame structure according to claim 4, wherein the profiled frame element (2) has a second groove (16) extending in profile direction (X), which is provided on the outside of the profiled frame element (2) and which is preferably arranged opposite the first groove (14).

6. The frame structure according to one of claims 4 or 5, wherein the first and/or second groove (14, 16) extends at least partially into the first or second protrusion (10, 12).

7. The frame structure according to one of claims 4 to 6, wherein the first and/or second groove (14, 16) extends over or along only a part of the first or second protrusion (10, 12) extending in profile direction (X).

8. The frame structure according to one of the preceding claims, wherein a blind hole (22) or through-hole is provided in the second protrusion (12).

9. The frame structure according to one of the preceding claims, further comprising a shell element (4), which substantially surrounds the profiled frame element (2), wherein the shell element (4) may be or is, fixed to the profiled frame element (2), preferably in that the fastening means (6) is in engagement with the first protrusion (10).

10. The frame structure according to claim 9, wherein the shell element (4) has an inwardly projecting protrusion (24), which is, or can be brought, preferably into form-locked engagement with the groove (14, 16) provided in the profiled frame element.

11. The frame structure according to claim 9 or 10, wherein the shell element (4) has a through-hole (26) for the fastening means (6) only on the side adjacent to the first protrusion (10).

12. The frame structure according to one of the preceding claims, wherein the first and second protrusions (10, 12) of the profiled frame element (2) are arranged mirror-symmetrically to one another.

13. Shell element of a frame structure of a perambulator, child seat, infant carrier or the like,
which is formed in the manner of a sleeve, and
has an inwardly projecting protrusion (24),
further comprising a second inwardly projecting protrusion,
wherein the two protrusions are provided on opposite inside surfaces of the shell element,
**characterized in that**
the shell element comprises on one side surface only one or more through-holes (20) for fastening means (6), which extend through the protrusion.

## Revendications

1. Structure de cadre d'une poussette, d'un siège pour enfant, d'une coque pour bébé ou similaire,
comportant un profilé de cadre (2) qui présente une section transversale sensiblement constante le long de sa direction de profilé (X),
le profilé de cadre (2) étant formé par une section transversale au moins majoritairement fermée, et
le profilé de cadre (2) comprenant une première saillie (10) pénétrant vers l'intérieur, qui est conçue pour venir en engagement avec un moyen de fixation (6), et
le profilé de cadre (2) comprenant une seconde saillie (12) pénétrant vers l'intérieur,
**caractérisée en ce que**
le profilé de cadre (2) présente au moins un trou traversant (20) qui s'étend à travers la première saillie (10), et
l'axe du trou traversant (20) recoupe la seconde saillie (12).

2. Structure de cadre selon la revendication 1,
dans laquelle la seconde saillie (12) est agencée à l'opposé de la première saillie (10).

3. Structure de cadre selon l'une des revendications précédentes,
dans laquelle la première et/ou la seconde saillie (10, 12) s'étend sur toute la direction de profilé (X) ou bien, vue en direction de profilé (X), uniquement sur une partie de l'extension du profilé de cadre (2) en direction de profilé (X).

4. Structure de cadre selon l'une des revendications précédentes,
dans laquelle
le profilé de cadre (2) présente une première gorge (14) s'étendant en direction de profilé (X), qui est prévue sur le côté extérieur du profilé de cadre (2).

5. Structure de cadre selon la revendication 4,
dans laquelle
le profilé de cadre (2) présente une seconde gorge (16) qui s'étend en direction de profilé (X), qui est prévue sur le côté extérieur du profilé de cadre (2) et qui est agencée de préférence à l'opposé de la première gorge (14).

6. Structure de cadre selon l'une des revendications 4 ou 5,
dans laquelle
la première et/ou la seconde gorge (14, 16) pénètre(nt) au moins partiellement dans la première ou dans la seconde saillie (10, 12).

7. Structure de cadre selon l'une des revendications 4 à 6,
dans laquelle
la première et/ou la seconde gorge (14, 16) ne s'étend(ent) que sur ou le long d'une partie de la première ou de la seconde saillie (10, 12) s'étendant en direction de profilé (X).

8. Structure de cadre selon l'une des revendications précédentes,
dans laquelle
un trou borgne (22) ou un trou traversant est prévu dans la seconde saillie (12).

9. Structure de cadre selon l'une des revendications précédentes, comprenant en outre un élément enveloppe (4) qui entoure sensiblement le profilé de cadre (2), l'élément enveloppe (4) étant immobilisé ou étant susceptible d'être immobilisé sur le profilé de cadre (2) par un ou par le moyen de fixation (6), de préférence du fait que le moyen de fixation (6) est en engagement avec la première saillie (10).

10. Structure de cadre selon la revendication 9,
dans laquelle
l'élément enveloppe (4) présente une saillie (24) pénétrant vers l'intérieur, qui est en engagement ou susceptible d'être en engagement de préférence par coopération de forme avec la gorge (14, 16) prévue dans le profilé de cadre.

11. Structure de cadre selon la revendication 9 ou 10,
dans laquelle
l'élément enveloppe (4) présente un trou traversant (26) pour le moyen de fixation (6) uniquement sur le côté voisin de la première saillie (10).

12. Structure de cadre selon l'une des revendications précédentes,
dans laquelle
la première et la seconde saillie (10, 12) du profilé de cadre (2) sont agencées à symétrie l'une de l'autre par rapport à un plan.

13. Élément enveloppe d'une structure de cadre d'une poussette, d'un siège pour enfant, d'une coque pour bébé ou similaire,
qui est réalisé en forme de douille, et
qui comprend une saillie (24) pénétrant vers l'intérieur,
et qui comprend en outre une seconde saillie pénétrant vers l'intérieur, les deux saillies étant prévues sur des surfaces intérieures opposées de l'élément enveloppe,
**caractérisé en ce que**
l'élément enveloppe présente uniquement sur une surface latérale un ou plusieurs trous traversants (20) pour des moyens de fixation (6), qui s'étend ou s'étendent à travers la saillie (24).
